# EUROPEAN PATENT APPLICATION

(11) **EP 1 662 497 A2**
(43) Date of publication of application: **31.05.2006**
(21) Application number: 05257309.4
(22) Date of filing: 28.11.2005
(51) Int. Cl.: G11B 7/085, G11B 21/08

(54) **Guide shaft holding mechanism and disk device including the guide shaft holding mechanism**

(30) Priority: 30.11.2004 JP 2004346467
(71) Applicant: ORION ELECTRIC CO., Ltd., Fukui 915-8555 (JP)
(72) Inventor: Azai, Kouji, Echizen-city Fukui 915-8555 (JP)
(74) Representative: Paget, Hugh Charles Edward

(57) **Abstract**

To make it possible to downsize a device by reducing an occupied space on a chassis occupied by a holding mechanism of a guide shaft as much as possible. A support part 10 is constructed by integrally molding guide walls 12A, 12B which restrict movement of a guide shaft 4 in a radial direction, a stopper part 13 which restricts movement of the guide shaft in a thrust direction and a hook part 14 which restricts slipping-off of the guide shaft 4. A coil spring 21 is provided at a position opposed to the hook part 14 disposed between the guide walls 12A and 12B and the stopper part 13. Thereby, the holding mechanism 25 of the guide shaft 4 including the support part 10 and the coil spring 21 is organized to be compact, and the occupied space of the holding mechanism 25 in a chassis 1 is reduced.

## Description

### BACKGROUND OF THE INVENTION

### Field of the Invention

The present invention relates to a guide shaft holding mechanism and a disk device including the guide shaft holding mechanism, and particularly relates to a holding mechanism of a guide shaft, which moves in parallel a pickup which records information into a storage medium such as an optical disk and/or reproduces information recorded in the storage medium, and a disk device including the guide shaft holding mechanism.

### Description of the Related Art

For example, in a disk device, a pickup is included, and the pickup moves in parallel in a radius direction of an optical disk along a pair of guide shafts fixed to a chassis to record information into the optical disk and/or reproduces information recorded in the optical disk. As an art of fixing the guide shaft for the pickup to a chassis as described above, the ones of various structures are conventionally proposed, and for example, Japanese Utility Model Laid-Open Publication No. 2-46967 (patent document 1) discloses the art of forming a reference piece and a pressing piece from a chassis by folding and twisting the pressing piece with an end portion of the guide shaft bumped into the reference piece to hold both ends of the guide shaft, while Japanese Patent Laid-Open Publication No. 7-57404 (patent document 2) discloses the art of providing a cut and raised portion at a chassis, bumping a peripheral surface of a guide shaft to the cut and raised portion, screwing a screw for pressing the guide shaft against the cut and raised portion into the chassis to hold the guide shaft by the screw and the cut and raised portion.

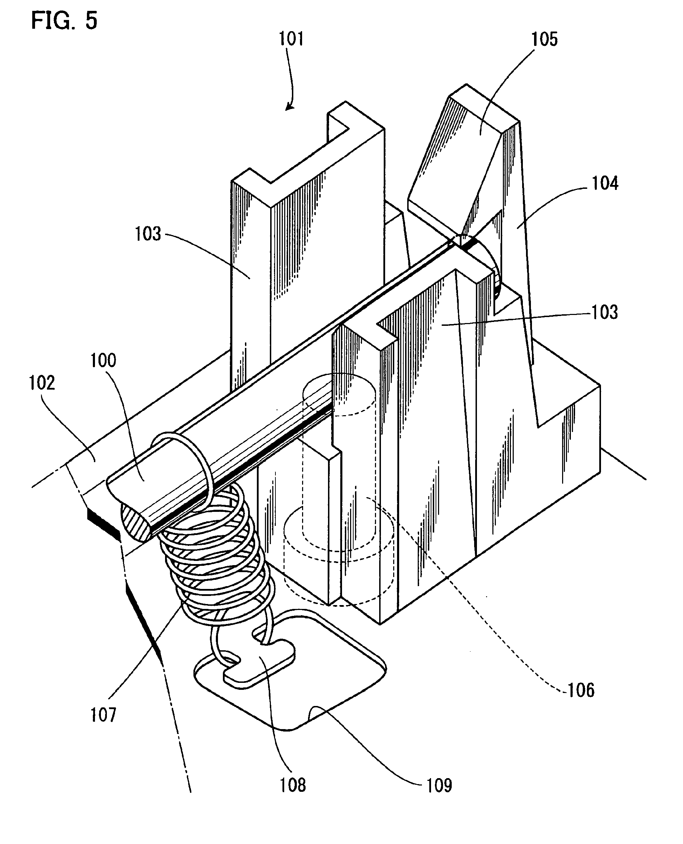

However, the above described guide shaft holding mechanism positions and holds the guide shaft with respect to the chassis to which the pickup is simply assembled, but the guide shaft for pickup which is used for a disk drive is important in accuracy in the height direction, and unless the position in the height direction is adjusted to a proper value, there occur various kinds of problems that an optical axis of a laser beam emitted from the optical pickup inclines with respect to the reading/writing surface of the optical disk or a turn table surface for mounting the optical disk and rotating it, focusing is not obtained and the like. Therefore, it is preferable that the pickup guide shaft for this kind of disk has the structure capable of adjusting height. As a structure for adjusting the height of the guide shaft like this, a height adjusting mechanism of a guide shaft as shown in FIG. 5, for example, is brought into actual use.

Explaining a conventional height adjusting mechanism of a guide shaft with reference to FIG. 5, a support part 101 which supports an end portion of a guide shaft 100 to guide movement of a pickup (not shown) is fixed to a chassis 102 in which a pickup is incorporated by outsert molding or the like. The support part 101 is a resin molded product formed by integrally molding a pair of guide walls 103 which restricts movement in a radial direction of the guide shaft 100, a stopper part 104 which is vertically provided in an orthogonal direction with respect to the guide wall 103 and has flexibility to restrict movement in a thrust direction of the above described guide shaft 100, and a hook part 105 which is integrally formed at an upper end portion of the above described stopper part 104 to restrict slipping off of the guide shaft 100 inserted between the above described guide walls 103. An adjusting screw 106 is screwed into the above described chassis 102 to be located between the above described guide walls 103, an open hole 109 which is located at a side portion of the above described support part 101 and has a locking piece 108 for locking a coil spring 107 is formed in the chassis 102 by stamping, and by laying the above described coil spring 107 between the locking piece 108 and the guide shaft 100, the guide shaft 100 inserted between the guide walls 103 is pressed against the adjusting screw 106.

A holding mechanism of the guide shaft 100 constructed as above performs adjustment in the height direction of the guide shaft 100 by moving the guide shaft 100 bumped against the adjusting screw 106 upward or downward by rotating the adjusting screw 106. However, in the holding mechanism of the guide shaft 100 shown in FIG. 5, the coil spring 107 for pressing the guide shaft 100 against the adjusting screw 106 and the open hole 109 for mounting the coil spring 107 are disposed at the position away from the support part 101, and therefore, the mounting spaces for the coil spring 107 and the open hole 109 other than the support part 101 is required in the chassis 102, the mounting spaces for the coil spring 107 and the open hole 109 including the support part 101 increase, and the other components cannot be mounted to these mounting spaces. Therefore, when the other components are mounted in the vicinity of the support part 101, the mounting spaces for the coil spring 107 and the open hole 109 need to be secured by avoiding the components, and the guide shaft 100 is formed to be longer than necessary, which is disadvantageous for downsizing and miniaturization of the disk device.

### SUMMARY OF THE INVENTION

Thus, the present invention has an object to provide a guide shaft holding mechanism which makes it possible to downsize and miniaturize the device by reducing an occupied space on the chassis occupied by the holding mechanism of the guide shaft as much as possible, and a disk device including the guide shaft holding mechanism.

A guide shaft holding mechanism according to claim 1 of the present invention is characterized by including a guide shaft which guides a movable body, and a holding mechanism which holds an end portion of the guide shaft to be capable of adjusting height with respect to a chassis, and characterized in that the holding mechanism comprises: a support part made by integrally forming a pair of guide walls which restrict movement of the aforesaid guide shaft in a radial direction, a stopper part which restricts movement of the guide shaft in a thrust direction and a hook part having flexibility which restricts slipping-off of the guide shaft inserted between the aforesaid guide walls; an adjusting screw which is screwed into the aforesaid chassis to be bumped against the aforesaid guide shaft; and a biasing member which is laid between the aforesaid chassis and the aforesaid guide shaft to bias the guide shaft in a direction to be pressed against the aforesaid adjusting screw, the aforesaid hook part is formed between the aforesaid guide walls and the stopper part, and the aforesaid biasing member is disposed to be opposed to the hook part.

According to the construction of claim 1, the guide shaft is restricted in the movement in the radial direction by being sandwiched by the inner surfaces of the left and right guide walls. Besides, the guide shaft is pressed against the adjusting screw by the biasing member laid between the guide shaft and the chassis, and the movement in the vertical direction of the guide shaft is restricted by the hook part and the adjusting screw. As a result, by turning the adjusting screw, the height and inclination of the guide shaft can be adjusted. In the support part, the hook part is disposed between the guide wall and the stopper part, and the biasing member is provided at the position opposed to the hook part, whereby it is possible to organize the holding mechanism of the guide shaft including the support part and the biasing member to be compact, and it is also made possible to mount the support part to the position without a margin of a mounting space due to peripheral apparatuses or the like.

The guide shaft holding mechanism according to claim 2 of the present invention is characterized in that the aforesaid biasing member is a coil spring, an engaging part which is slipped over the aforesaid guide shaft and an engaging part which is engaged with a locking piece formed at the aforesaid chassis are formed at both ends of the coil spring, and a guide groove which receives the aforesaid engaging part is provided in the aforesaid hook part.

According to the construction of claim 2, when the guide shaft is inserted between the guide walls, the coil spring can be accurately aligned with the position opposed to the hook part by aligning the engaging part of the coil spring with the guide groove of the hook part, and when the guide shaft is pushed downward against the elastic force of the hook part, the pressing force from the hook part does not act on the engaging part of the coil spring because the engaging part of the coil spring is disposed in the guide groove.

A disk device including a guide shaft holding mechanism according to claim 3 is characterized by including the guide shaft holding mechanism according to claim 1 or 2, and is characterized in that movement of a pickup, which performs read and/or write of information with respect to a storage medium, is guided with the aforesaid guide shaft, and the aforesaid pickup has a function of recording information into the aforesaid storage medium and/or reproducing information recorded in the aforesaid storage medium.

According to the construction of claim 3, after assembly of the turn table, the pickup and the like is finished in the assembly line of the disk device, the height and inclination of the guide shaft with respect to the disk can be adjusted by the adjusting screw so that the angle of laser light becomes a specified value.

### BRIEF DESCRIPTION OF THE DRAWINGS

FIG. 1 is a perspective view showing a guide shaft holding mechanism of the present invention.
FIG. 2 is a plane view of the guide shaft holding mechanism of the same.
FIG. 3 is a sectional view taken along the A to A line in FIG. 2 of the same.
FIG. 4 is a general plane view in which a guide shaft is incorporated of the same.
FIG. 5 is a perspective view showing a conventional guide shaft holding mechanism.

### DETAILED DESCRIPTION OF THE PREFERRED EMBODIMENTS

Hereinafter, an example of the best mode for carrying out a disk device including a guide shaft holding mechanism according to the present invention will be described by referring to the drawings, but the present invention is not limited to only an embodiment of the present invention.

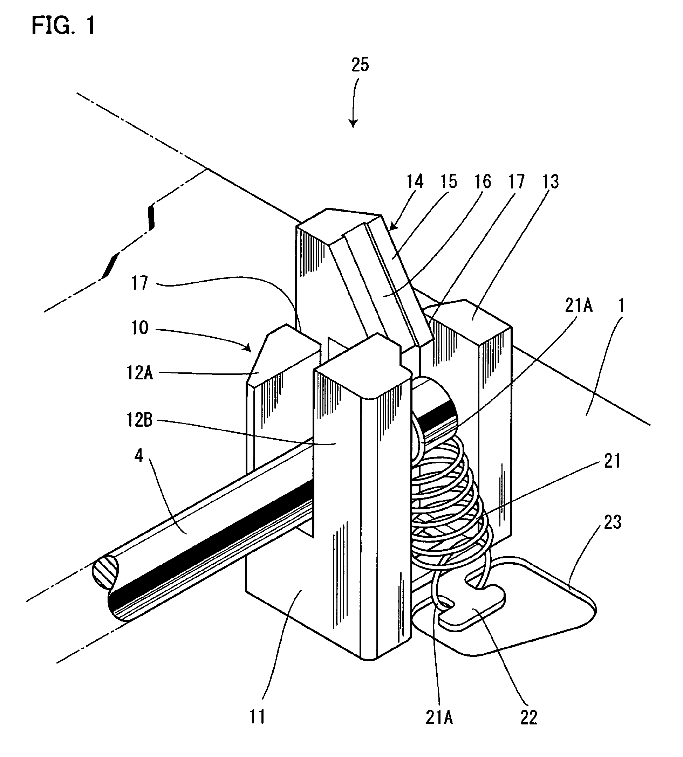

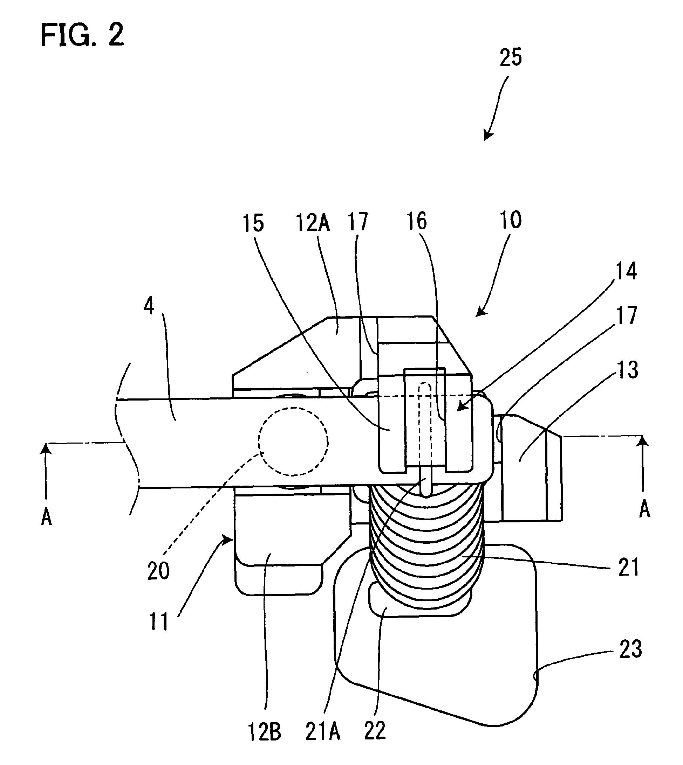

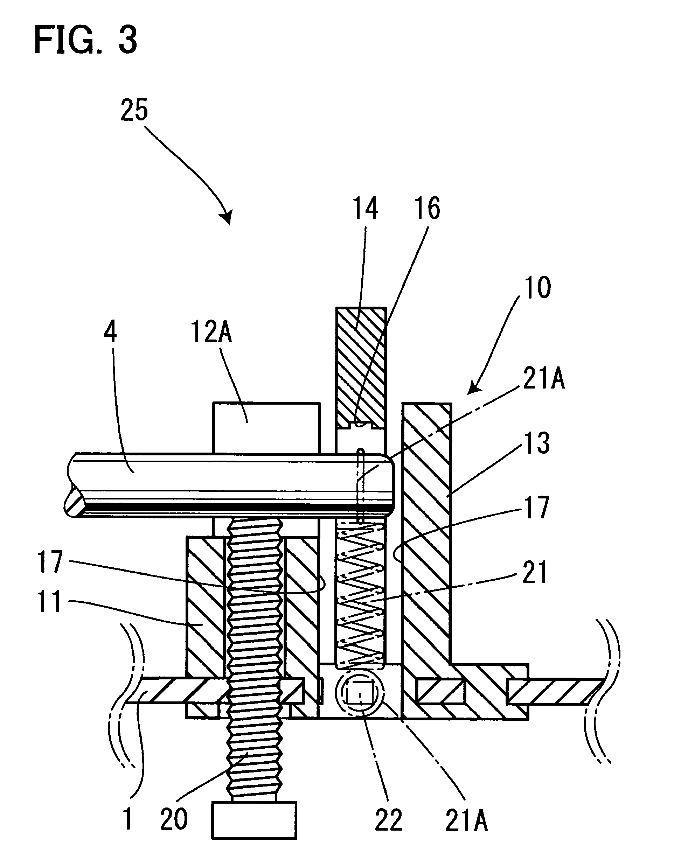

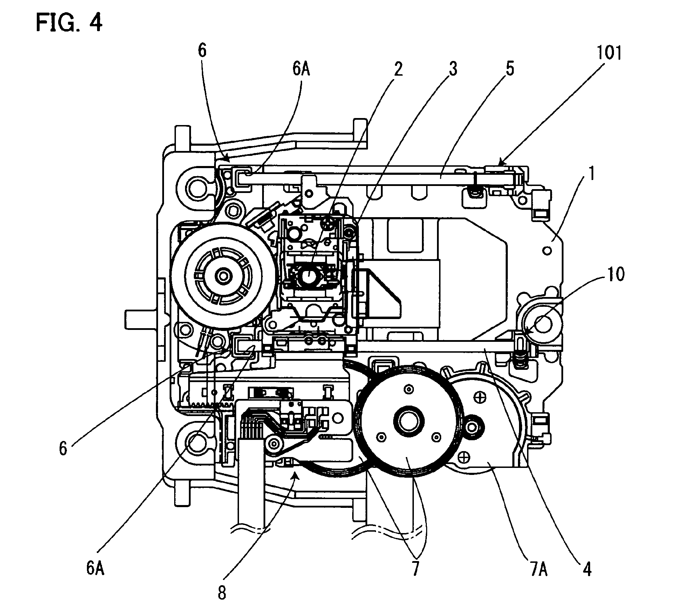

FIG. 1 is a perspective view showing a guide shaft holding mechanism of the present invention, FIG. 2 is a plane view of the guide shaft holding mechanism, FIG. 3 is a sectional view taken along the A to A line in FIG. 2, and FIG. 4 is a general plane view with a guide shaft being mounted thereto.

As shown in the drawings, reference numeral 1 denotes a chassis on which a pickup 3 of the disk device is mounted, and which is formed by folding a metallic thin plate, a pair of left and right guide shafts 4 and 5 for guiding the above described pickup 3 including a pickup lens 2 are assembled to the chassis 1. In order to hold both end portions of the guide shafts 4 and 5, a holding part 6 formed of a synthetic resin and a later-described support part are integrally formed on the above described chassis 1 by outsert molding or the like. The holding part 6 which supports one ends of the guide shafts 4 and 5 is for simply positioning the end portions of the guide shafts 4 and 5, and though the detailed explanation will be omitted, the holding part 6 has an engaging groove 6A which holds the one end portions of the guide shafts 4 and 5. As shown in FIG. 4, in this embodiment, the guide shaft 5 at one side is disposed substantially along one end outer edge of the chassis 1, the guide shaft 4 at the other side is assembled in the vicinity of a drive system unit 8 constituted of a motor 7A which drives the above described pickup 3, a plurality of gears 7 which transmits the rotation of the motor 7A to the pickup 3 and the like, and a comparatively sufficient margin of space exists in the vicinity of the guide shaft 5 which is disposed along the one end outer edge of the above described chassis 1 because the other components and the like are not incorporated therein. Therefore, the other end portion of the guide shaft 5 is supported by the support part 101 shown in the prior art in FIG. 5, and the details of it will be omitted. As for the guide shaft 4, the drive system unit 8 such as the motor 7A and the gears 7 is assembled in the vicinity of the guide shaft 4 as described above, and therefore, the guide shaft 4 is supported by a support part 10 which is different from the support part 101.

The above described support part 10 is a molded product of a resin which is made by integrally molding a base part 11, a pair of guide walls 12A and 12B which are vertically provided at both sides of the base part to opposed to each other and restrict movement of the guide shaft 4 in the radial direction, a stopper part 13 which is vertically provided at a rear end portion of the base part 11 and restricts movement of the guide shaft 4 in a thrust direction, and a hook part 14 having flexibility to restrict slipping-off of the guide shaft 4 inserted between the above described guide walls 12A and 12B, and is integrated with the above described chassis 1 by proper means such as outsert molding. The above described hook part 14 has a taper surface 15 which abuts on the shaft 4 when the shaft 4 is inserted between the above described guide walls 12A and 12B, and a guide groove 16 which receives later-described biasing means is formed on the taper surface 15. The hook part 14 is located in an intermediate portion between the above described guide wall 12A and the stopper part 13, and slits 17 for elastically deforming the hook part 14 to bend outside when the taper surface 15 and the shaft 4 abut on each other at the time of inserting the above described shaft 4 are formed between the guide wall 12A and the hook part 14, and between the hook part 14 and the stopper part 13.

An adjusting screw 20 for adjusting the height of the above described guide shaft 4 is screwed onto the above described chassis 1 by being penetrated through the above described base part 11 to be located between the above described guide walls 12A and 12B, and the guide shaft 4 is placed on its tip end. The guide shaft 4 inserted between the above described guide walls 12A and 12B is always pressed against the above described adjusting screw 20 by a coil spring 21 which is the biasing means which is laid between the guide shaft 4 and the chassis 1. The coil spring 21 which biases the guide shaft 4 has ring-shaped engaging parts 21A at both ends, and in order to engage one of the engaging parts 21A, an opening 23 having a locking piece 22 is formed in the above described chassis 1 by stamping. Then, one of the engaging parts 21A of the coil spring 21 is slipped over the guide shaft 4, and the other engaging part 21A is locked at the locking piece 22 formed on the chassis 1, whereby the coil spring 21 is laid between the guide shaft 4 and the chassis 1 to be opposed to the above described hook part 14. A holding mechanism 25 for the guide shaft 4 is constructed by the support part 10 which positions the guide shaft 4, the adjusting screw 20 which adjusts the height of the guide shaft 4, and the coil spring 21 which presses the above described guide shaft 4 against the adjusting screw 20.

Next, explaining the mounting procedure of the guide shafts 4 and 5, with the one ends of the guide shafts 4 and 5 inserted into the engaging grooves 6A of the holding part 6, the other end sides of the guide shafts 4 and 5 are held by the support parts 10 and 101 first. Here, the explanation of the support part 101 at the guide shaft 5 side will be omitted, and assembling procedure of the guide shaft 4 and the support part 10 will be mainly explained. First, the one end of the guide shaft 4 is inserted in the engaging groove 6A of the holding part 6 with the guide shaft 4 passed through the engaging part 21A of the coil spring 21 which is previously locked at the locking piece 22, and with the holding part 6 as a support point, the other end of the guide shaft 4 is caused to abut on the taper surface 15 of the hook part 14, and the guide shaft 4 is further inserted between the guide walls 12A and 12B. On this occasion, by aligning the engaging part 21A of the coil spring 21 with the guide groove 16 formed on the taper surface 15, the coil spring 21 can be accurately aligned with the position opposed to the hook part 14, and when the guide shaft 4 is pressed downward along the taper surface 15 of the hook part 14 against an elastic force of the hook part 14, the engaging part 21A of the coil spring 21 is disposed in the guide groove 16, whereby the pressing force from the hook part 14 does not act on the engaging part 21A of the coil spring 21, and therefore, the engaging part 21A of the coil spring 21 is not deviated and not removed from the coil spring 21, thus making it possible to efficiently assembling the guide shaft 4. When the guide shaft 4 rides over the hook part 14 by pushing the guide shaft 4 downward along the taper surface 15 of the hook part 14 against the elastic force of the hook part 14 in this manner, the hook part 14 returns by the elastic force of the hook part 14 itself. Thereby, the guide shaft 4 is restricted in movement in the radial direction by being sandwiched by the inner surfaces of the left and right guide walls 12A and 12B. The guide shaft 4 is pressed against the adjusting screw 20 screwed between the guide walls 12A and 12B by the coil spring 21 laid between the guide shaft 4 and the chassis 1, and further, movement of the guide shaft 4 in the vertical direction is restricted by the returned hook part 14 and the adjusting screw 20. As a result, after assembling of the turn table, the pickup 3 and the like is finished in the assembly line or the like of the disk device, the height and inclination of the guide shaft 4 with respect to the disk can be adjusted by the adjusting screw 20 so that the angle of the laser light is at the specified value by turning the adjusting screw 20.

As described above, in this embodiment, in the support part 10 of the guide shaft 4, the hook part 14 is disposed between the guide walls 12A and 12B and the stopper part 13, and the coil spring 21 which presses the guide shaft 4 against the adjusting screw 20 is provided at the position opposed to the hook part 14, whereby the holding mechanism 25 for the guide shaft 4 including the support part 10 and the coil spring 21 can be organized to be extremely compact. As a result, the support part 10 can be also mounted to a portion around which the drive system unit 8 and the like are assembled and a margin of a mounting space does not exist, it is not necessary to dispose the support part 10 by avoiding the peripheral apparatus of the drive system unit 8, and therefore, the measures for extending the length of the guide shaft 4 is not needed. The occupied space of the holding mechanism 25 in the chassis 1 can be reduced, and therefore, the entire device can be made compact.

By forming the guide groove 16 which receives the engaging part 21A of the coil spring 21 on the taper surface 15 of the hook part 14 which abuts on the guide shaft 4 when the guide shaft 4 is inserted between the guide walls 12A and 12B, the coil spring 21 laid between the guide shaft 4 and the chassis 1 can be accurately aligned with the position opposed to the hook part 14, the engaging part 21A of the coil spring 21 is disposed in the guide groove 16, and therefore, the pressing force from the hook part 14 does not act on the engaging part 21A of the coil spring 21. Thereby, it does not happen that the guide shaft 4 is removed by the engaging part 21A of the coil spring 21 being deviated, and therefore, the guide shaft 4 can be efficiently assembled, thus making it possible to enhance its assembling operability.

One embodiment of the present invention is described in detail above, but the present invention is not limited to the above described one embodiment, but various modifications can be carried out within the scope of the spirit of the present invention. For example, in the above described embodiment, the example in which the end portion of the guide shaft 5, which is disposed along the one end outer edge of the chassis 1, is supported by the support part 101 is shown, but it may be supported by the support part 10 as the guide shaft 4. The basic structure such as positional relationship and shape of each component in the support part 10 which supports the guide shaft 4 is not limited to the above described embodiment, but it may be properly selected. Further, in the above described embodiment, the case in which the present invention is applied to the disk device is explained as an example, but the present invention can be widely applied to the guide shafts used in various kinds of electronic apparatuses.

According to the guide shaft holding mechanism according to claim 1 of the present invention, the guide shaft holding mechanism includes a guide shaft which guides a movable body, and a holding mechanism which holds an end portion of the guide shaft to be capable of adjusting height with respect to a chassis, wherein the holding mechanism comprises: a support part made by integrally forming a pair of guide walls which restrict movement of the aforesaid guide shaft in a radial direction, a stopper part which restricts movement of the guide shaft in a thrust direction and a hook part having flexibility which restricts slipping off of the guide shaft inserted between the aforesaid guide walls; an adjusting screw which is screwed into the aforesaid chassis to be bumped against the aforesaid guide shaft; and a biasing member which is laid between the aforesaid chassis and the aforesaid guide shaft to bias the guide shaft in a direction to be pressed against the aforesaid adjusting screw, the aforesaid hook part is formed between the aforesaid guide walls and the stopper part, and the aforesaid biasing member is disposed to be opposed to the hook part. Therefore, the holding mechanism of the guide shaft including the support part and the biasing member can be organized to be compact, it is made possible to mount the support part to a position without a margin of a mounting space, it is not necessary to dispose the support part by avoiding the peripheral apparatuses, and therefore, the measures to extend the length of the guide shaft and the like are not necessary. Besides, the occupied space of the holding mechanism in the chassis can be reduced, and therefore, it is possible to make the entire device compact.

According to the guide shaft holding mechanism according to claim 2 of the present invention, the aforesaid biasing member is a coil spring, an engaging part which is slipped over the aforesaid guide shaft and an engaging part which is engaged with a locking piece formed at the aforesaid chassis are formed at both ends of the coil spring, and a guide groove which receives the aforesaid engaging part is provided in the aforesaid hook part. Therefore, when the guide shaft is inserted between the guide walls, the coil spring is accurately aligned with the position opposed to the hook part by aligning the engaging part of the coil spring with the guide groove of the hook part. When the guide shaft is pushed downward against the elastic force of the hook part, the pressing force from the hook part does not act on the engaging part of the coil spring because the engaging part of the coil spring is disposed in the guide groove, and therefore, there is no worry about the engaging part of the coil spring being deviated and removed from the guide shaft, thus making it possible to efficiently assemble the guide shaft.

According to the disk device including the guide shaft holding mechanism according to claim 3 of the present invention, the disk device includes the guide shaft mechanism according to claim 1 or 2, wherein movement of a pickup, which performs read and/or write of information with respect to a storage medium, is guided with the aforesaid guide shaft, and the aforesaid pickup has a function of recording information into the aforesaid storage medium and/or reproducing information recorded in the aforesaid storage medium. Therefore, the height and inclination of the guide shaft with respect to the disk can be easily adjusted by the adjusting screw so that the angle of the laser light becomes a specified value, and when the guide shaft which guides the movement of the pickup is mounted, the motor for moving the pickup, a plurality of gear groups which transmit the rotation of the motor to the pickup and the components such as circuit boards for controlling them are intensively disposed on the chassis. Therefore, it is effective in downsizing and miniaturizing the device to organize the holding mechanism of the guide shaft including the support part and the biasing member to be compact and to reduce the occupied space of the holding mechanism in the chassis.

## Claims

1. A guide shaft holding mechanism comprising a guide shaft which guides a movable body, and a holding mechanism which holds an end portion of the guide shaft to be capable of adjusting height with respect to a chassis, wherein the holding mechanism comprises: a support part made by integrally forming a pair of guide walls which restrict movement of said guide shaft in a radial direction, a stopper part which restricts movement of the guide shaft in a thrust direction and a hook part having flexibility which restricts slipping off of the guide shaft inserted between said guide walls; an adjusting screw which is screwed into said chassis to bump against said guide shaft; and a biasing member which is laid between said chassis and said guide shaft to bias the guide shaft in a direction to be pressed against said adjusting screw, said hook part is formed between said guide walls and the stopper part, and said biasing member is disposed to be opposed to the hook part.

2. The guide shaft holding mechanism according to claim 1, wherein said biasing member is a coil spring, an engaging part which is slipped over said guide shaft and an engaging part which is engaged with a locking piece formed at said chassis are formed at both ends of the coil spring, and a guide groove which receives said engaging part is provided in said hook part.

3. A disk device including a guide shaft holding mechanism, comprising the guide shaft holding mechanism according to claim 1 or 2, wherein movement of a pickup, which performs read and/or write of information with respect to a storage medium, is guided with said guide shaft, and said pickup has a function of recording information into said storage medium and/or reproducing information recorded in said storage medium.
